(19) Europäisches Patentamt
European Patent Office
Office européen des brevets

(11) Publication number: **0 114 452 B1**

(12) # EUROPEAN PATENT SPECIFICATION

(45) Date of publication of patent specification: **30.12.86**

(51) Int. Cl.$^4$: **C 08 G 69/00,** C 08 G 69/16

(21) Application number: **83300335.3**

(22) Date of filing: **24.01.83**

(54) **Process for the preparation of a polyamide.**

(43) Date of publication of application:
**01.08.84 Bulletin 84/31**

(45) Publication of the grant of the patent:
**30.12.86 Bulletin 86/52**

(84) Designated Contracting States:
**BE CH DE FR GB IT LI LU NL SE**

(56) References cited:
**Chemical Abstracts,vol. 72, no. 20, 18 May 1970, Columbus, Ohio (US); p. 55, column 2, *abstract* 101768y**

(73) Proprietor: **THE STANDARD OIL COMPANY**
**Midland Building**
**Cleveland, Ohio 44115 (US)**

(72) Inventor: **Muyen, Michael Wu**
**2425 17th Street**
**Cuyahoga Falls, OH 44223 (US)**
Inventor: **Ball, Lawrence Ernest**
**1824 Joan of Arc Circle**
**Cuyahoga Falls, OH 44331 (US)**

(74) Representative: **Smith, Sydney et al**
**Elkington and Fife High Holborn House**
**52/54 High Holborn**
**London WC1V 6SH (GB)**

**EP 0 114 452 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a new process for preparing a copolyamide comprising polymerizing an alpha, beta-unsaturated nitrile, water and a lactam.

The preparation of a polyamide from acrylonitrile and water is disclosed in U.S. Patent Nos. 3,629,203 and 3,499,879. The ring opening addition polymerization of caprolactam is also known and is carried out by adding a catalytic amount of water to open the ring and then later removing the water at an elevated temperature. Surprisingly, we have now found that although these polymerizations proceed by different mechanisms the alpha, beta-unsaturated nitrile, water and lactam can be polymerized together to form a copolymer under the appropriate reaction conditions.

The process of this invention results in high yields of a copolyamide which has particularly good physical properties. Moreover, the percent water insolubility and the structure of the resultant copolyamide can be varied by varying the reaction conditions.

We have found that copolyamides can be prepared by a process comprising polymerizing an alpha, beta-unsaturated nitrile, water and a lactam. More particularly, it has been discovered that a copolyamide containing both three carbon and six carbon carbonamide repeating units can be prepared by polymerizing acrylonitrile and water with a molar excess of caprolactam.

According to the invention there is provided a process for producing a copolyamide comprising polymerizing an alpha, beta-unsaturated nitrile and water with a molar excess of a lactam.

The copolyamides obtained by the process of the invention are generally defined as containing carbonamide repeating units as follows:

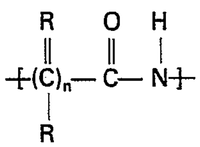

(I)

wherein R is a suitable substituent and n is 2—11. Each copolymeride will contain at least two different carbonamide repeating units. Preferred copolyamides are those wherein R is hydrogen and n is 2 and 5.

The copolyamides of this invention can be polymerized with other monomers and/or resins. These monomers and/or resins are selected from the group consisting of polyamides such as nylon-3, nylon-4, nylon-6, nylon-6,6, nylon-6,10, nylon-11, nylon-12, or monomers thereof such as ammonium acrylate; esters such as methyl acrylate; unsaturated acids or salts thereof; and vinyl monomers such as acrylamide.

The properties of the copolyamides obtained by the process of the invention vary depending upon the amount and identity of the monomers used and the reaction conditions. The preferred polyamides are melt processable without decomposition and highly crystalline.

The process according to the invention involves copolymerization of an alpha, beta-unsaturated nitrile, water and a lactam.

Any alpha, beta-unsaturated nitrile can be polymerized in accordance with the invention. The preferred nitriles contain less than 40 carbon atoms and are represented by the following formula:

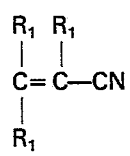

(II)

wherein each $R_1$ is independently hydrogen or a $C_{1-30}$ alkyl group.

More preferred nitriles are those wherein each $R_1$ is independently hydrogen or a $C_{1-4}$ alkyl group. Examples of these nitriles include acrylonitrile and methacrylonitrile.

Any lactam can be used as a comonomer in the process of the invention. The preferred lactams contain less than 40 carbon atoms and can be represented by the following formula:

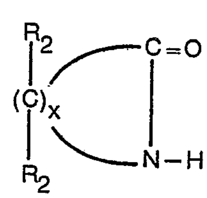

(III)

wherein x is 3 to 11 and wherein each $R_2$ is independently hydrogen or a $C_{1-30}$ alkyl group. More preferred lactams are those wherein x is 3 to 5 and $R_2$ is hydrogen or a $C_{1-4}$ alkyl. Examples of these lactams include caprolactam and pyrrolidone.

This process according to the invention works best when a molar excess of the lactam is present. Theoretically, all that is needed for the polymerization is one mole of lactam per mole of acrylonitrile and water. However, it has been found that at equal molar ratios, the copolyamide formed has a low molecular weight and takes a long time to form. Therefore, the molar ratio of the nitrile to the lactam is preferably less than 1 to 1, more preferably less than 0.5 to 1, most preferably less than 0.33 to 1.

The third monomer component is water. The ratio of the nitrile to the water is preferably about 1 to 1.

Other monomers or polymers can also be polymerized with the nitrile, water and lactam in this process. For example, ammonium acrylate, ammonium methacrylate, a nylon-3 monomer, can be polymerized with the nitrile and lactam to produce a copolyamide. Since one mole of water is generated when one mole of ammonium acrylate is polymerized to a polyamide, it is only necessary to add enough water so that there is a total of one mole of water, from the ammonium acrylate polymerization and from the added water, for every one mole of the nitrile. Preferably, the molar ratio of the nitrile to the ammonium acrylate is approximately 1 to 1, and thus it is not necessary to add any water. In this monomer system, the ratio of the nitrile to the lactam can vary widely and ratios of less than 1 to 1 can be used to prepare copolyamide. It is preferred to use a ratio of less than 1 to 2. It is more preferred to use a ratio of less than 1 to 3. For the purposes of this invention, any ammonium salt of an alpha, beta-unsaturated carboxylic acid can be used instead of the ammonium acrylate.

The process of the invention can be conducted under a broad range of process conditions. It is important to maintain suitable contact between the monomers so that the desired polymerization can occur. Although suitable contact time can be established when the monomers are in the solid, liquid or gaseous phase, it is preferred to perform the polymerization in the liquid phase. This liquid phase can be obtained by various methods including the use of solvents.

In carrying out the process it is preferred that the monomers be maintained at a temperature above their melting points but below the decomposition temperature of the monomers or product polymers, which is generally about 350°C. It is more preferred to conduct this process at a temperature between 125°C and 250°C, and conducting the process between 150°C and 200°C, is most preferred.

The time required for the polymerization process according to the invention will depend upon various process parameters. For example, at low temperatures it will take longer for the copolyamide to form than at high temperatures. In general, the reaction is conducted in less than 48 hours with times ranging from 8 to 24 hours normally being adequate to produce polymers.

Although the monomers can be polymerized in contact with the atmosphere, a more desirable group of copolyamides having high intrinsic viscosities and molecular weights are obtained by carrying out the polymerization in the absence of oxygen. This can be achieved by blanketing the reaction mixture with either an inert gas such as nitrogen or with gaseous ammonia.

The polymerization according to the invention can proceed at atmospheric, superatmospheric or subatmospheric pressure. Preferably, the monomers are heated under superatmospheric pressures. It has been found that at pressures such as 0 to 5,000 psig (0 to 34500 kPa gauge) are preferable with 50 to 2,000 psig (345 to 13800 kPa gauge) being most preferable.

The polymerization process of this invention can proceed by any of the generally known modes of polymerization including bulk, slurry, suspension or solution polymerization by batch continuous or intermittent addition of the monomers and other components.

It is often convenient to carry out the process of the invention in the presence of a diluent which may also be a solvent to the monomers, products or both. Inert diluents which can be used in the process of this invention include hydrocarbons such as benzene, toluene, xylene, ethyl benzene, solvent naphtha, n-hexane, cyclohexane, isooctane and decalin; ether such as dioxane, diethyl ether, dibutyl ether and dimethoxy ethane; aromatic halogenated compounds such as chlorobenzene and dichlorobenzene. In addition to these organic solvents, an anhydrous solvent such as liquid ammonia may also be used.

The polymerization conditions have a large effect on the physical properties of the resultant copolyamide. Lower polymerization temperature, increased polymerization time and catalysts favour the formation of a copolyamide containing higher percentages of a carbonamide comprising three carbons. Increased polymerization time favours formation of higher molecular weight copolyamides.

Certain catalysts have been found to be effective in the process of the present invention. These catalysts comprise tertiary amines such as tripentylamine and tripropylamine.

At the end of the polymerization, the unreacted monomers are removed from the reaction mass by suitable means e.g. distillation, extraction with a solvent or mixture of solvents or by combination of such techniques. The unreacted material may be removed in conjunction with removal of low molecular weight polymers, if desired. Any suitable solvent or mixture of solvents may be employed in purifying the crude reaction product. The reaction of the solvent is more or less selective. If the polymerization reaction is carried out in the inert organic diluent in which the polymer is insoluble, the polymer will precipitate and may be removed by filtration, centrifugation, etc. The polymer which is obtained may easily be purified by extracting it with a liquid that is a solvent for the monomer but which is not a solvent for the polymer. Frequently, water is used for this purpose.

The polymers produced according to the invention have a wide variety of applications. Generally, they may be used in any application calling for a polyamide. For example, these copolyamides can be used as fibres, plastics, films and molding resins.

The following examples illustrate the invention. In each of the examples, the polymer formed was identified by various analytical techniques as a copolyamide.

Example 1

The monomers, acrylonitrile and water and caprolactam, were charged into a 1 litre non stirred autoclave reactor in a molar ratio of 1/1/2. The autoclave was purged with nitrogen for 2 minutes and then pressurized. The polymerization proceeded for 2 hours at 160°C and then for 22 hours at 210°C. The reactor was cooled and opened and the polymer was broken into small pieces and then water extracted for 24 hours. The water insolubility was found to be 42.4% and the polymer comprised 20% 3-carbon carbonamides and 80% 6 carbon carbonamides.

Examples 2—8

The procedure of Example 1 was repeated. The polymerization conditions and the structure of the resultant copolyamide is shown in Table I

TABLE I
Preparation of Copolyamides

| Ex. | Reactants | Molar Ratio | React Temp/ Time (°C/Hr) | % H20 Insolub. | Melt Point (°C) | Struc. ** | % Crystal |
|---|---|---|---|---|---|---|---|
| 1 | Acrylo/ water/ caprolactam | 1/1/2 | 160/ 2<br>210/22 | 42.4 | 155 | 20/80 | 40.30 |
| 2 | " | 1/1/2 | 140/ 2<br>180/22 | 22.5 | 160 | 24/76 | 43.1 |
| 3 | " | 1/1/2 | 189/24<br>230/16 | 45.3 | 155 | 22/78 | 42.4 |
| 4 | " | 1/1/3 | 193/24 | 53.1 | 165 | 16/84 | 42.3 |
| 5 | " | 1/1/3 | 160/ 2<br>195/22 | 60.2 | 155 | 11/89 | 41.6 |
| 6 | " | 1/1/3 | 175/24<br>200/16 | 68.0 | 155 | 19/81 | 42.7 |
| 7* | " | 1/1/2 | 160/ 2<br>205/22 | 37.0 | 145 | 30/70 | 43.5 |
| 8* | " | 1/1/3 | 193/24 | 55.7 | 155 | 26/74 | 39.6 |

*Reactor contains 5% (molar) of tripentylamine based on acrylonitrile concentration.
**Ratio of 3 carbon carbonamides to 6 carbon carbonamides in polymer backbone.

Example 9

The monomers, i.e. acrylonitrile, ammonium acrylate and caprolactam, were changed into a 25 ml glass ampoule in a molar ratio of 1/1/3. The ampoule was purged with nitrogen for 30 seconds and sealed with a flame. The ampoule was then placed into a protective metal cage and then the cage containing the ampoule was placed in an air oven set at 175°C for 24 hours. The ampoule was cooled and opened and the polymer was broken into small pieces and then water extracted for 24 hours. The water insolubility of this polymer was 30.4%, the crystallinity was 45.4% and the polymer comprised 32% 3-carbon carbonamides and 68% carbon carbonamides.

## Claims

1. A process for producing a copolyamide comprising polymerizing an alpha, beta-unsaturated nitrile and water with a molar excess of a lactam.

2. A process as claimed in claim 1 characterised in that it is conducted at a temperature between 125°C and 250°C.

3. A process as claimed in claim 1 or claim 2 characterised in that the process is carried out in the absence of oxygen.

4. A process as claimed in any of claims 1 to 3 characterised in that the molar ratio of the nitrile to the lactam is less than 0.5 to 1.

5. A process as claimed in claim 4 characterised in that the molar ratio is less than 0.33 to 1.

6. A process as claimed in any of claims 1 to 5 characterised in that the molar ratio of the nitrile to the water is approximately 1 to 1.

7. A process as claimed in any of claims 1 to 6 characterised in that the nitrile has the following formula:

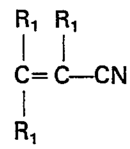

wherein each $R_1$ is independently hydrogen or a $C_{1-30}$ alkyl group.

8. A process as claimed in claim 7 characterised in that the nitrile is acrylonitrile.

9. A process as claimed in any of claims 1 to 8 characterised in that the lactam has the following formula:

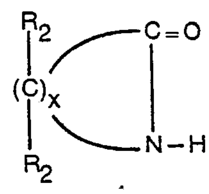

wherein each $R_2$ is independently hydrogen or a $C_{1-4}$ alkyl group and x is 3 to 11.

10. A process as claimed in claim 9 characterised in that x is 3 to 5.

11. A process as claimed in claim 10 characterised in that the lactam is caprolactam.

12. A process as claimed in any of claims 1 to 11 characterised in that the monomers are contacted with a tertiary amine catalyst.

13. A process for producing copolyamide comprising polymerizing an ammonium salt of an alpha, beta-unsaturated carboxylic acid and alpha, beta-unsaturated nitrile with a lactam.

14. A process as claimed in claim 13 characterised in that the ammonium salt is ammonium acrylate or ammonium methacrylate.

15. A process as claimed in claim 13 or claim 14 characterised in that the ratio of the acid to the nitrile is approximately 1 to 1.

16. A process as claimed in any of claims 13 to 15 characterised in that the ratio of the nitrile to the lactam is less than 1 to 2.

**Patentansprüche**

1. Verfahren zur Herstellung eines Copolyamids, das umfaßt das Polymerisieren eines α,β-ungesättigten Nitrils und von Wasser mit einem molaren Überschuß eines Lactams.

2. Verfahren nach Anspruch 1, dadurch gekennzeichnet, daß es bei einer Temperatur zwischen 125 und 250°C durchgeführt wird.

3. Verfahren nach Anspruch 1 oder 2, dadurch gekennzeichnet, daß das Verfahren in Abwesenheit von Sauerstoff durchgeführt wird.

4. Verfahren nach einem der Ansprüche 1 bis 3, dadurch gekennzeichnet, daß das Molverhältnis des Nitrils zu dem Lactam weniger als 0,5:1 beträgt.

5. Verfahren nach Anspruch 4, dadurch gekennzeichnet, daß das Molverhältnis weniger als 0,33:1 beträgt.

6. Verfahren nach einem der Ansprüche 1 bis 5, dadurch gekennzeichnet, daß das Molverhältnis des Nitrils zu dem Wasser etwa 1:1 beträgt.

7. Verfahren nach einem der Ansprüche 1 bis 6, dadurch gekennzeichnet, daß das Nitril die folgende Formel hat:

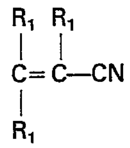

worin jeder Rest $R_1$ unabhängig Wasserstoff oder eine $C_{1-4}$-Alkylgruppe bedeutet.

8. Verfahren nach Anspruch 7, dadurch gekennzeichnet, daß es sich bei dem Nitril um Acrylonitril handelt.

9. Verfahren nach einem der Ansprüche 1 bis 8, dadurch gekennzeichnet, daß das Lactam die folgende Formel hat:

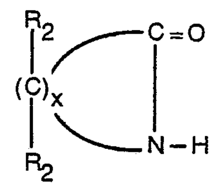

worin jeder Rest $R_2$ unabhängig Wasserstoff oder eine $C_{1-4}$-Alkylgruppe bedeutet und x für 3 bis 11 steht.

10. Verfahren nach Anspruch 9, dadurch gekennzeichnet, daß x für 3 bis 5 steht.

11. Verfahren nach Anspruch 10, dadurch gekennzeichnet, daß es sich bei dem Lactam um Caprolactam handelt.

12. Verfahren nach einem der Ansprüche 1 bis 11, dadurch gekennzeichnet, daß die Monomeren mit einem tertiären Amin-Katalysator in Kontakt gebracht werden.

13. Verfahren zur Herstellung eines Copolyamids, das umfaßt das Polymerisieren eines Ammnoniumsalzes einer α,β-ungesättigten Carbonsäure und eines α,β-ungesättigten Nitrils mit einem Lactam.

14. Verfahren nach Anspruch 13, dadurch gekennzeichnet, daß es sich bei dem Ammoniumsalz um Ammoniumacrylat oder um Ammoniummethacrylat handelt.

15. Verfahren nach Anspruch 13 oder 14, dadurch gekennzeichnet, daß Verhältnis der Säure zu dem Nitril etwa 1:1 beträgt.

16. Verfahren nach einem der Ansprüche 13 bis 15, dadurch gekennzeichnet, daß das Verhältnis des Nitrils zu dem Lactam weniger als 1:2 beträgt.

**Revendications**

1. Procédé pour la production d'un copolyamide consistant à polymériser un nitrile alpha, beta-insaturé et de l'eau avec un excès molaire d'un lactame.

2. Procédé selon la revendication 1, caractérisé par le fait qu'il est effectué à une température se situant entre 125°C et 250°C.

3. Procédé selon la revendication 1 ou la revendication 2, caractérisé par le fait que le procédé est réalisé en l'absence d'oxygène.

4. Procédé selon l'une des revendications 1 à 3, caractérisé par le fait que le rapport molaire du nitrile au lactame est de moins de 0,5 à 1.

5. Procédé selon la revendication 4, caractérisé par le fait que le rapport molaire est de moins de 0,33 à 1.

6. Procédé selon l'une des revendications 1 à 5, caractérisé par le fait que le rapport molaire du nitrile à l'eau est d'approximativement 1 à 1.

7. Procédé selon l'une des revendications 1 à 6, caractérisé par le fait que le nitrile présente la formule suivante:

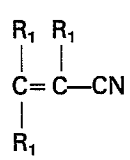

formule dans laquelle chaque $R_1$ représente, indépendamment, l'hydrogène ou un groupe alkyle en $C_{1-4}$.

8. Procédé selon la revendication 7, caractérisé par le fait que le nitrile est l'acrylonitrile.

9. Procédé selon l'une des revendications 1 à 8, caractérisé par le fait que le lactame présente la formule suivante:

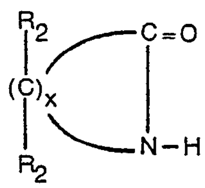

formule dans laquelle chaque $R_2$ représente, indépendamment, l'hydrogène ou un groupe alkyle en $C_{1-4}$ et x vaut de 3 à 11.

10. Procédé selon la revendication 9, caractérisé par le fait que x vaut de 3 à 5.

11. Procédé selon la revendication 10, caractérisé par le fait que le lactame est le caprolactame.

12. Procédé selon l'une des revendications 1 à 11, caractérisé par le fait que les monomères sont mis en contact avec une amine tertiaire comme catalyseur.

13. Procédé pour la production d'un copolyamide consistant à polymériser un sel d'ammonium d'un acide carboxylique alpha, bèta-insaturé et un nitrile alpha, bêta-insaturé avec un lactame.

14. Procédé selon la revendication 13, caractérisé par le fait que le sel d'ammonium est l'acrylate d'ammonium ou le méthacrylate d'ammonium.

15. Procédé selon la revendication 13 ou la revendication 14, caractérisé par le fait que le rapport de l'acide au nitrile est d'approximativement 1 à 1.

16. Procédé selon l'une des revendications 13 à 15, caractérisé par le fait que le rapport du nitrile au lactame est de moins de 1 à 2.